**Europäisches Patentamt**

**European Patent Office**

**Office européen des brevets**

(11) Veröffentlichungsnummer: **0 048 879**
**A1**

(19)

(12) **EUROPÄISCHE PATENTANMELDUNG**

(21) Anmeldenummer: **81107220.6**

(22) Anmeldetag: **14.09.81**

(51) Int. Cl.³: **C 08 C 1/14,** C 08 L 71/02, C 08 J 3/16, C 08 J 3/02

(30) Priorität: **26.09.80 DE 3036373**

(43) Veröffentlichungstag der Anmeldung: **07.04.82**
**Patentblatt 82/14**

(84) Benannte Vertragsstaaten: **BE DE FR GB IT NL**

(71) Anmelder: **BAYER AG, Zentralbereich Patente, Marken und Lizenzen, D-5090 Leverkusen 1, Bayerwerk (DE)**

(72) Erfinder: **Perrey, Hermann, Dr., Auf der Rheinaue 8, D-4150 Krefeld 11 (DE)**
Erfinder: **Matner, Martin, Dr., Dorfstrasse 14, D-5068 Odenthal (DE)**

(54) **Mischung aus alkoxylierten Polyaminen und Polyetherverbindungen, deren Herstellung und Verwendung als Wärmesensibilisierungsmittel.**

(57) Mischung aus 2–50 Gew.-Teilen eines wasserlöslichen, alkoxylierten Polyamins und 50–98 Gew.-Teilen eines nicht-ionischen Tensides auf Polyetherbasis, ein Verfahren zur Herstellung der Mischung, dadurch gekennzeichnet, daß man 2–50 Gew.-Teile eines wasserlöslichen alkoxylierten Polyamins mit 50–98 Gew.-Teilen eines nichtionischen Tensides auf Polyetherbasis in bekannter Weise in beliebiger Reihenfolge miteinander bei Temperaturen von 0–50°C mischt, sowie die Verwendung der Mischung als Wärmesensibilisierungsmittel bei einem Verfahren zur Wärmesensibilisierung eines natürlichen und/oder synthetischen Latex.

BAYER AKTIENGESELLSCHAFT     5090 Leverkusen, Bayerwerk

Zentralbereich
Patente, Marken und Lizenzen   E-by-c

Mischung aus alkoxylierten Polyaminen und Polyetherverbindungen, deren Herstellung und Verwendung als
Wärmesensibilisierungsmittel

Die Erfindung betrifft eine Mischung aus wasserlöslichen, alkoxylierten Polyaminen und Polyetherverbindungen, deren Herstellung durch ein übliches Mischverfahren sowie deren Verwendung als Wärmesensibilisierungsmittel bei der Herstellung von wärmesensiblen
natürlichen und/oder synthetischen Latices.

In der DE-AS 2 226 269 sind eine Reihe von Wärmesensibilisierungsmitteln, wie z.B. Polyvinylalkylether,
wasserlösliche Polyacetale, oxalkylierte Polysiloxane
und kationenaktive Stoffe, und ihre Nachteile beschrieben. In dieser Auslegeschrift sowie auch in der
DE-AS 2 263 921 wird ein Verfahren zum Wärmesensibilisieren von Polymerdispersionen vorgestellt, bei dem
alkoxylierte Amine mit inverser Löslichkeit in Wasser
den Polymerdispersionen zugesetzt werden und hierauf
der pH-Wert des Gemisches unter 6 gestellt wird.

Le A 20 594-EP

- 2 -

Doch auch dieses Verfahren vermag nicht zu befriedigen, insbesondere weil die benötigten Einsatzmengen an oxalkylierten Aminen inverser Löslichkeit bezogen auf die Polymerisatmenge sehr hoch liegen. Alkoxylierte Alkylamine mit 10-24 C-Atomen im Alkylrest sind als Wärmesensibilisierungsmittel in der Schweizer Patentanmeldung 4600/73 beschrieben. Jedoch auch hier sind große Einsatzmengen zur Wärmesensibilisierung erforderlich.

Die Mischungen aus Aminen und Polyetherverbindungen gemäß der DE-OS 2 905 651 wirken nur in pH-Wertbereichen unter 7. Dies hat zur Folge, daß in manchen Fällen die mechanische Stabilität aber auch die Lagerstabilität der wärmestabilen Latexmischungen unbefriedigend ist. Darüber hinaus ist aufgrund der pH-Einschränkung ein Zusatz bestimmter Füllstoffe, wie z.B. Kreide, ausgeschlossen.

Aufgabe der Erfindung ist es, ein Wärmesensibilisierungsmittel bereitzustellen, welches die geschilderten Nachteile nicht aufweist.

Gegenstand der Erfindung ist somit eine Mischung von 2-50 Gew.-Teilen wasserlöslichen, alkoxylierten Polyamine und 50-98 Gew.-Teilen nichtionischen Tensiden auf Polyetherbasis.

Ein weiterer Gegenstand der Erfindung ist ein Verfahren

Le A 20 594

- 3 -

zur Herstellung der Mischung, welches dadurch gekennzeichnet ist, daß man 2-50 Gew.-Teile wasserlösliche, alkoxylierte Polyamine mit 50-98 Gew.-Teilen nichtionischen Tensiden auf Polyetherbasis in bekannter Weise in beliebiger Reihenfolge miteinander bei Temperaturen von 0-50°C, bevorzugt 10-35°C, mischt.

Ein weiterer Gegenstand der Erfindung ist die Verwendung der Mischung als Wärmesensibilisierungsmittel bei einem Verfahren zur Wärmesensibilisierung eines natürlichen und/oder synthetischen Latex.

Als verwendbare nichtionische Tenside auf Polyetherbasis können alle oberflächenaktiven Polyalkoxylate von Alkoholen, aliphatischen Carbonsäuren, aliphatischen Carbonsäureamiden und Alkylsulfonsäureamiden mit vorzugsweise 10-20 C-Atomen und von alkylierten Phenolen, Naphtholen und Hydroxydiphenylen mit vorzugsweise 6-16 C-Atomen im Alkylrest eingesetzt werden, wobei sich die Polyalkoxylreste von Alkylenoxiden, vorzugsweise von Ethylen- und/oder Propylenoxid ableiten. Vorzugsweise sind 3-50 Ethylenoxid und/oder 3-30 Propylenoxideinheiten vorhanden.

Die Verbindungen dieser Art, ihre Herstellung und ihre physikalischen Eigenschaften sind in vielen Veröffentlichungen ausführlich beschrieben, so z.B. in K. Lindner, Tenside-Textilhilfsmittel-Waschrohstoffe, Wiss.-Verlags GmbH, Stuttgart 1964, auf S. 864 ff. Vorzugsweise

Le A 20 594

werden solche Produkte eingesetzt, die wasserlösliche bzw. wasseremulgierbar sind. Beispielhaft seien aufgeführt: Fettalkohol-, Fettsäure- und Fettsäureamidethoxylate mit vorzugsweise 7-50 Ethylenoxideinheiten, Octyl- und Nonylphenolethoxylate mit vorzugsweise 7-50 Ethylenoxideinheiten, Benzyl-hydroxydiphenylethoxylate mit vorzugsweise 7-30 Ethylenoxideinheiten.

Als verwendbare nichtionische Tenside auf Polyetherbasis können ferner Alkylenoxid-Blockpolymerisate, die unter der Bezeichnung Pluronics bekannt sind, eingesetzt werden. Herstellung, Aufbau und Eigenschaften dieser Produkte, die durch Einwirkung von Ethylenoxid auf unlösliche Polyalkylenoxide, vorzugsweise Polypropylenoxide, entstehen, sind z.B. von K. Lindner auf Seite 1052 ff beschrieben.

Als wasserlösliche Polyamine werden ethoxy- und propoxylierte Polyamine eingesetzt, die sich von Ethylendiamin, Diethylentriamin, Triethylentetramin, Tetraethylenpentamin, Pentaethylenhexamin, Propylendiamin, Butylendiamin- oder Hexamethylendiamin ableiten. Bevorzugt werden eth- und/oder propoxylierte Diamine verwendet.

Nur solche alkoxylierte Polyamine sind geeignet, die im Temperaturbereich von 0 bis 100°C in Wasser löslich sind. Diese Produkte unterscheiden sich deutlich von den höheralkoxylierten Polyetheraminen, die inverse Löslichkeit besitzen, d.h. die bei tiefen Temperaturen löslich sind, jedoch bei Temperaturerhöhung weniger

- 5 -

löslich oder sogar unlöslich werden.

Bevorzugte alkoxylierte Polyamine stellen Umsetzungsprodukte aus 1 Mol Polyamin mit bis zu 4 Molen Ethylen- und/oder Propylenoxid dar.

Besonders bevorzugte Produkte erhält man durch Umsetzung von Ethylen- oder Hexamethylendiamin mit bis zu 4 Mol Ethylen- und/oder Propylenoxid.

Zur Herstellung der wärmesensibilisierbaren synthetischen Polymerlatices können übliche olefinisch ungesättigte Monomere in wäßriger Emulsion polymerisiert werden. Beispiele für die Herstellung derartiger Latices finden sich in der deutschen Patentschrift 1 243 394 und in den deutschen Offenlegungsschriften 2 232 526 und 2 005 974. Als Monomere kommen alle radikalisch polymerisierbaren olefinisch ungesättigten Verbindungen in Frage, z.B. Ethylen, Butadien, Isopren, Acrylnitril, Styrol, Divinylbenzol, $\alpha$-Methylstyrol, Methacrylnitril, Acrylsäure, Methacrylsäure, 2-Chlorbutadien-1,3, Ester der Acrylsäure und Methacrylsäure mit $C_1$-$C_8$-Alkoholen oder Polyolen, Acrylamid, Methacrylamid, N-Methylol(meth)-acrylamid, (Meth)acrylamido-N-methylolmethylether, Itaconsäure, Maleinsäure, Fumarsäure, Diester und Halbester ungesättigter Dicarbonsäuren, Vinylchlorid, Vinylacetat, Vinylidenchlorid, die allein oder in Kombination miteinander eingesetzt werden können.

Le A 20 594

- 6 -

Die Polymerisation wird in Gegenwart von Emulgatoren durchgeführt, wobei die üblichen nichtionischen oder anionischen Emulgiermittel allein oder in Kombination miteinander verwendet werden können. Die Gesamtmenge an Emulgator beträgt ca. 0,1-10 Gew.-%, bezogen auf die Monomeren.

Die Emulsionspolymerisation kann mit Radikalbildnern, vorzugsweise mit organischen Peroxidverbindungen ausgelöst werden, die in Mengen von 0,01 bis 2 Gew.-%, bezogen auf Monomere, eingesetzt werden. Je nach Monomerkombination können zur Erniedrigung des Molekulargewichtes des Polymerisats geringe Mengen an Reglern mitverwendet werden, z.B. Mercaptane, Halogenkohlenwasserstoffe. Die Emulsionspolymerisation ist auf zwei Wegen möglich:

Man kann die Gesamtmenge der Monomeren und den größten Teil der die Emulgatoren enthaltenden wäßrigen Phase vorlegen, die Polymerisation durch Zugabe des Initiators starten und im Verlauf der Polymerisation den Rest der wäßrigen Phase kontinuierlich oder absatzweise zugeben. Man kann auch die Technik des "Monomerenzulaufs" benutzen; dabei wird nur ein Teil der Monomeren und der das Emulgiermittel enthaltenden wäßrigen Phase vorgelegt und nach Starten der Polymerisation der Rest der Monomeren und der wäßrigen Phase gleichmäßig oder absatzweise nach Maßgabe des Umsatzes zugefügt. Der zudosierte Monomerenanteil kann in der wäßrigen Phase voremulgiert sein. Beide Verfahren sind bekannt.

Le A 20 594

Als Beispiel für natürliche Polymerlatices sei Naturkautschuk-Latex erwähnt.

Die wärmesensibel einstellbaren Latices können vor oder
bei der Verarbeitung mit Zusatzstoffen versetzt werden. Zusätze sind z.B. Farbstoffe, Pigmente, Füllstoffe,
Verdicker, Alterungsschutzmittel, wasserlösliche Harze
oder Vulkanisationschemikalien.

Die Verarbeitung der wärmesensiblen Latexmischungen
kann in sauren wie auch in alkalischen pH-Bereich erfolgen. Eine alkalische Verarbeitung ist dann geboten,
wenn bestimmte Füllstoffe, wie z.B. Kreide, eingesetzt werden. In diesen Fällen hat sich ein pH-Wert
von 7-8,5 als vorteilhaft erwiesen. Bei saurer Verarbeitung der Mischungen haben sich pH-Werte von 3-5
bewährt. Die Einstellung des pH-Wertes geschieht mit
organischen Carbonsäuren, wie z.B. Ameisensäure,
Essigsäure, Bernsteinsäure oder Maleinsäure, vorzugsweise in wäßriger Lösung, oder mit verdünnten Mineralsäuren.

Die Zugabe der Koagulierreagentien und der Polyetherverbindungen zu den
Polymerlatices, die einen Polymergehalt von 5-55 Gew.-%,
vorzugsweise 5-45 Gew.-%, aufweisen, erfolgt in beliebiger Reihenfolge. Die Mischung aus Koagulierreagentien und Polyetherverbindungen kann auch getrennt nach
dem erfindungsgemäßen Verfahren hergestellt und anschließend zugegeben werden. Bezogen auf den Polymer-

Le A 20 594

- 8 -

gehalt kommen die alkalischen Amine in 0,01-8 Gew.-%, vorzugsweise 0,05-4 Gew.-%, zur Anwendung, während die Polyetherverbindungen zu 0,5-10 Gew.-%, vorzugsweise 1-6 Gew.-%, zugegeben werden. Hierbei besteht bei konstantem pH-Wert eine Abhängigkeit zwischen den Einsatzmengen an Amin und Polyetherverbindungen. Je mehr Amin verwendet wird, desto niedriger stellt sich bei konstanter Polyethermenge nach Wärmesensibilisierung der Koagulationspunkt ein, bzw. je mehr Polyetherverbindung verwendet wird, desto höher stellt sich bei konstanter Aminkonzentration der Koagulationspunkt ein.

In manchen Fällen kann die ohnehin gute mechanische Stabilität der Mischungen durch Zugabe von 0,5-3 Gew.-%, bezogen auf das Polymerisat, anionaktiver Emulgatoren, wie vorzugsweise Alkylsulfonate oder Alkylarylsulfonate noch gesteigert werden.

Mischungen aus Latices und den Aminen sind ohne Polyetherverbindungen nicht wärmesensibilisierbar. Je nach pH-Wert der Mischung kommt es direkt bei der Zugabe des Amins oder nach längerem Stehenlassen zur Stippenbildung oder vollständiger Koagulation der Mischung bereits bei Zimmertemperaturen.

Le A 20 594

Beispiel 1

Zu 300 Gew.-Teilen eines 43,5 %igen Latex eines Copolymerisates von 46 Gew.-% Styrol, 50 Gew.-% Butadien, 2 Gew.-% Acrylsäure und 2 Gew.-% N-Methylolacrylamid gibt man eine Lösung von 2 g eines mit einem
Mol propoxylierten Ethylendiamins und 6 g eines
ethoxylierten Nonylphenols (10 Mol Ethylenoxid/Mol)
in 190 g Wasser.

Hierauf wird mit 10 %iger wäßriger Maleinsäure der
pH erniedrigt und der Koagulationspunkt nach folgender Methode bestimmt:

Ca. 10 g der wärmesensibel eingestellten Mischung
werden in ein Becherglas eingewogen und in ein
Wasserbad mit einer konstanten Temperatur von 80°C
gebracht. Unter gleichmäßigem Rühren der Mischung
mit einem Thermometer werden das Koagulierverhalten
und der Temperaturanstieg verfolgt. Als Koagulationspunkt der Mischung wird die Temperatur angegeben, bei
der eine vollständige und endgültige Trennung von
Polymerisat und wäßriger Phase eintritt.

In Abhängigkeit vom pH-Wert ermittelt man folgende
Koagulationspunkte:

Le A 20 594

| pH | Koagulationstemperatur |
|----|------------------------|
| 6  | 49 |
| 5  | 41 |
| 4  | 40 |
| 3  | 39 |
| 2  | 37 |

Die Mischungen sind bei den angegebenen pH-Werten außerordentlich lagerstabil und weisen nach einer Woche Lagerung die gleichen Koagulationspunkte auf.

Beispiel 2

Man verfährt analog Beispiel 1, verwendet jedoch nunmehr eine Lösung von 4 g eines mit einem Mol Ethylenoxid umgesetzten Hexamethylendiamins und 6 g des Nonylphenolethoxylats in 19 g Wasser. Man säuert mit Maleinsäure an. Hierbei ermittelt man in Abhängigkeit vom eingestellten pH-Wert die Koagulationspunkte.

| pH-Wert | 7 | 6 | 5 | 4 | 3 | 2 |
|---------|----|----|----|----|----|----|
| Koagulationspunkt | 49 | 45 | 44 | 43 | 43 | 42 |

Auch nach einer Woche Lagerzeit wurden die gleichen Koagulationspunkte gefunden.

Le A 20 594

## Beispiel 3

Analog Beispiel 1 gibt man zu dem Latex eine Lösung
von 5 g eines mit 2 Mol propoxyliertem Ethylendiamins
und 6 g eines Nonylphenolethoxylats (20 Mol Ethylenoxid/Mol) in 190 g Wasser.

Koagulationspunkt bei pH 5: 41°C
                        3: 38°C

## Beispiel 4

Analog Beispiel 1 gibt man zu dem Latex eine Lösung
von 3 g eines mit einem Mol Propylenoxid umgesetzten
Hexamethylendiamins und 6 g eines ethoxylierten Benzylhydroxydiphenyls (11 Mol Ethylenoxid/Mol) in 190 g
Wasser.

Koagulationspunkt bei pH 5    41°
                            pH 3    40°

Auch nach einer Woche Lagerung weist die Mischung
den gleichen Koagulationspunkt auf.

## Beispiel 5

Zu 228 g des in Beispiel 1 beschriebenen Latex gibt
man eine Lösung von 1 g eines mit einem Mol Propylenoxid umgesetzten Hexamethylendiamins, 1 g eines

Le A 20 594

Nonylphenolethoxylats (10 Mol Ethylenoxid/Mol) in 57 g Wasser. Hierauf fügt man unter Rühren 113 g einer feingemahlenen handelsüblichen Kreide hinzu und stellt mit 10 %iger Maleinsäure den Koagulationspunkt der Mischung auf pH 8,0.

Koagulationspunkt 46°C

Auch nach einer Standzeit von 1 Woche hat sich der Koagulationspunkt nicht verändert.

## Beispiel 6

Zu 300 Gew.-Teilen eines 40 %igen Latex eines Copolymerisates von 64 Gew.-% Butadien, 31 Gew.-% Acrylnitril, 3,5 Gew.-% N-Methylolacrylamid und 1,5 Gew.-% Acrylamid gibt man eine Lösung von 6 g eines mit einem Mol Propylenoxid umgesetzten Hexamethylendiamins und 6 g eines Nonylphenolethoxylats (10 Mol Ethylenoxid/Mol) in 190 g Wasser.

Hierauf wird mit 10 %iger wäßriger Maleinsäure, Essigsäure oder Bernsteinsäure angesäuert und der Koagulationspunkt bei verschiedenen pH-Werten der Mischung gemessen.

| pH-Wert | 7 | 6 | 5 | 4 | 3 | 2 |
|---|---|---|---|---|---|---|
| Koagulationspunkt | 43 | 43 | 43 | 43 | 52 | 41 |

Le A 20 594

- 13 -

Auch nach einer Standzeit von einer Woche weisen die Proben den gleichen Koagulationspunkt auf.

**Beispiel 7**

Zu 228 g des in Beispiel 6 beschriebenen Latex gibt man eine Lösung von 2 g eines mit einem Mol Propylenoxid umgesetzten Hexamethylendiamins, 1 g eines Nonylphenolethoxylats und 2 g eines ethoxylierten Benzylhydroxydiphenyls (11 Mol Ethylenoxid/Mol) in 57 g Wasser. Hierauf fügt man unter Rühren 113 g einer feingemahlenen handelsüblichen Kreide hinzu und stellt mit 10 %iger Maleinsäure den Koagulationspunkt der Mischung auf pH 7,5.

Koagulationspunkt 49°C

Auch nach einer Standzeit von 1 Woche hat sich der Koagulationspunkt nicht verändert.

Die mechanische Stabilität, gemessen nach nachfolgender Vorschrift ergab, daß auch nach 1 h Rührzeit noch keine Stippen ermittelt wurden.

Methode zur Bestimmung der mechanischen Stabilität: 500,0 g der zu prüfenden Latexmischung werden bei 20°C in einem Becherglas von 13 cm Durchmesser der mechanischen Beanspruchung durch einen schnell laufenden Vierblattrührer unterworfen. Der Flügel des Rührers besitzt einen

Le A 20 594

Durchmesser von ca. 8 cm. Die Rührgeschwindigkeit beträgt 1500 Umdrehungen/Min. Jede 5 Minuten wird eine Probe der Latexmischung entnommen, auf einen dunklen Papierstreifen ausgestrichen und auf Koagulatbildung hin untersucht. Sobald die ersten Koagulatteilchen beobachtet werden, wird die Zeit gestoppt und der Test abgebrochen. Die Zeitspanne bis zum Auftreten des ersten Koagulates dient als Kriterium für die mechanische Stabilität. Spätestens nach 60 Minuten wird der Rest abgebrochen.

## Beispiel 8

Man verfährt analog Beispiel 7, gibt jedoch 3 statt 2 g des propoxylierten Hexamethylendiamins hinzu

| | |
|---|---|
| pH | 8,1 |
| Koagulationspunkt | 46°C (konstant über 1 Woche) |
| mechanische Stabilität | 60 Minuten |

Le A 20 594

## Patentansprüche

1. Mischung aus 2-50 Gew.-Teilen eines wasserlöslichen, alkoxylierten Polyamins und 50-98 Gew.-Teilen eines nichtionischen Tensides auf Polyetherbasis.

2. Mischung gemäß Anspruch 1 erhaltend ein ethoxy- und/oder propoxyliertes Polyamin, welches im Temperaturbereich von 0 bis 100°C wasserlöslich ist.

3. Mischung gemäß Anspruch 1 enthaltend ein alkoxyliertes Polyamin, welches durch Umsetzung eines Polyamins mit bis zu 4 Mol Ethylen- und/oder Propylenoxid hergestellt wurde.

4. Mischung gemäß Anspruch 1 enthaltend als nichtionisches Tensid auf Polyetherbasis Polyalkoxylate von Alkoholen, aliphatischen Carbonsäuren, aliphatischen Carbonsäureamiden und Alkylsulfonsäureamiden sowie von alkylierten Phenolen, alkylierten Naphtholen und Hydroxydiphenylen sowie Alkylenoxid Blockpolymerisate.

5. Mischung gemäß Anspruch 1 enthaltend Polyalkoxylate mit 3-50 Ethylenoxid- und/oder 3-30 Propylenoxideinheiten.

6. Verfahren zur Herstellung der Mischung gemäß Ansprüchen 1-5, dadurch gekennzeichnet, daß man

Le A 20 594

2-50 Gew.-Teile eines wasserlöslichen alkoxylierten Polyamins mit 50-98 Gew.-Teilen eines nichtionischen Tensides auf Polyetherbasis in bekannter Weise in beliebiger Reihenfolge miteinander bei Temperaturen von 0 - 50°C mischt.

7. Verwendung der Mischung gemäß Ansprüchen 1-5 als Wärmesensibilisierungsmittel bei einem Verfahren zur Wärmesensibilisierung eines natürlichen und/ oder synthetischen Latex.

8. Verwendung gemäß Anspruch 7 von 0,01-8 Gew.-%, bezogen auf den Polymergehalt, eines wasserlöslichen alkoxylierten Polyamins in Kombination mit 0,5-10 Gew.-%, bezogen auf den Polymergehalt, eines nichtionischen Tensides auf Polyetherbasis.

9. Verwendung gemäß Anspruch 7 von 0,05-4 Gew.-%, bezogen auf den Polymergehalt eines wasserlöslichen alkoxylierten Polyamins in Kombination mit 1-6 Gew.-%, bezogen auf den Polymergehalt, eines nichtionischen Tensids auf Polyetherbasis.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| XD | <u>DE - A - 2 905 651</u> (BAYER)<br>  * Ansprüche; Seite 6, Zeilen 3-4 * | 1-9 |
|  | -- |  |
| X | <u>FR - A - 2 333 003</u> (GOODRICH)<br>  * Ansprüche; Seite 4, Zeilen 1-6,21-32 * | 1-9 |
|  | -- |  |
| A | <u>DE - A - 2 617 589</u> (RHONE-POULENC)<br>  * Ansprüche * | 1 |
|  | -- |  |
| A | <u>DE - B - 1 056 370</u> (UCC)<br>  * Ansprüche * | 1 |
|  | ---- |  |

**KLASSIFIKATION DER ANMELDUNG (Int. Cl.³)**

C 08 C   1/14
C 08 L  71/02
C 08 J   3/16
         3/02

**RECHERCHIERTE SACHGEBIETE (Int. Cl.³)**

C 08 C   1/14
C 08 J   3/16
         3/02
C 08 L  71/02
C 11 D   1/44
         1/835

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-01-1982 | DERAEDT |

EPA form 1503.1   06.78